# EUROPÄISCHE PATENTSCHRIFT

(11) **EP 3 445 542 B1**
(45) Veröffentlichungstag und Bekanntmachung des Hinweises auf die Patenterteilung: **01.04.2020**
(21) Anmeldenummer: 17718962.8
(22) Anmeldetag: 27.04.2017
(51) Int. Cl.: B25J 17/02, B25J 9/04, B25J 9/10, B25J 9/12, B25J 19/00

(54) **MOTORISIERTES GELENK FÜR EINEN PROGRAMMIERBAREN BEWEGUNGSAUTOMATEN**
MOTORIZED JOINT FOR A PROGRAMMABLE AUTOMATIC MOVING UNIT
ARTICULATION MOTORISÉE POUR UN ROBOT MANIPULATEUR PROGRAMMABLE

(30) Priorität: 27.04.2016 LU 93043
(43) Veröffentlichungstag der Anmeldung: 27.02.2019
(73) Patentinhaber: Ovalo GmbH, 65555 Limburg (DE)
(72) Erfinder: GILGES, Siegmar, 65307 Bad Schwalbach (DE)
(74) Vertreter: Hoffmann, Jürgen
(86) Internationale Anmeldenummer: PCT/EP2017/060041
(87) Internationale Veröffentlichungsnummer: WO 2017/186843

(56) Entgegenhaltungen:
- WO-A1-2013/138912
- WO-A1-2015/115324
- JP-A- 2010 069 565

## Beschreibung

Die Erfindung betrifft ein motorisiertes Gelenk zum Verbinden von zwei relativ zueinander beweglichen Trägern eines programmierbaren Bewegungsautomaten, das einen Antriebsmotor und ein dem Antriebsmotor triebtechnisch nachgeschaltetes Getriebe sowie eine Feststellvorrichtung aufweist, wobei das Getriebe ein drehfest mit einer Abtriebswelle des Antriebsmotors verbundenes Antriebselement, wenigstens ein Zwischenelement, das eine andere Drehgeschwindigkeit aufweist, als das Antriebselement, sowie ein Abtriebselement aufweist, wobei die Feststellvorrichtung dazu ausgebildet und angeordnet ist, unmittelbar das Zwischenelement, das Abtriebselement oder ein drehfest mit dem Zwischenelement oder dem Abtriebselement verbundenes Bauteil abzubremsen und zu arretieren, und wobei die Feststellvorrichtung ein reibschlüssig mit dem Zwischenelement, dem Abtriebselement oder dem drehfest mit dem Zwischenelement oder dem Abtriebselement verbundenen Bauteil verbundenes Sperrmittel aufweist, welches wenigstens ein Formschlussmittel aufweist, das im zugeschalteten Zustand der Feststellvorrichtung formschlüssig mit einem relativ zu einem Gehäuse oder einem Chassis drehfesten Gegenformschlussmittel zusammen wirkt.

Aus US 8,614,559 B2 ist ein programmierbares Robotersystem bekannt. Das Robotersystem beinhaltet einen Roboter mit einer Anzahl von einzelnen Armabschnitten, wobei benachbarte Armabschnitte jeweils durch ein Gelenk miteinander verbunden sind. Das Robotersystem umfasst ferner in wenigstens einem Gelenk einen steuerbaren Antrieb sowie ein Steuersystem zum Steuern der Antriebe. Das Robotersystem weist außerdem eine Benutzerschnittstelle auf, über die das Robotersystem programmiert werden kann. Das Gelenk weist ein Gehäuse und einen in dem Gehäuse angeordneten Motor mit einer Motorwelle auf, die relativ zu dem Gehäuse rotiert. In dem Gehäuse befindet sich außerdem eine Sicherheitsbremse, die eine mittels eines Elektromagneten aktivierbare Sperrklinge aufweist. Die Sperrklinke greift in der aktivierten Stellung in ein unmittelbar mit der Motorwelle reibschlüssig verbundenes Bauteil ein.

Aus WO 2015/115324 A1 ist ein Reduktionsgetriebe mit einer Bremse bekannt. Die Bremse benötigt keine elektrische Energie und kann hierdurch einfach in eine Vorrichtung eingebaut werden, in der ein angetriebenes Element durch den Antrieb eines Motors betätigt wird.

Aus WO 2013/138912 A1 ist eine Drehmomentbegrenzungskupplung für orthopädische und prothetische Vorrichtungen bekannt. Die Kupplung umfasst einen Bremsschuh, ein Band, das an einem ersten äußeren Ende mit einem ersten äußeren Ende des Bremsschuhs verbunden ist, und einen Nocken, der ein zweites äußeres Ende des Bandes mit einem zweiten äußeren Ende des Bremsschuhs verknüpft, auf. Der Bremsschuh und das Band sind so konfiguriert, dass sie einen Drehmomentübertragungsausgang umschlingen, wodurch das Positionieren des Nockens in einer ersten Position reibschlüssig mit dem Bremsschuh und dem Band mit einem Drehmomentübertragungsausgang in Eingriff kommt. In einer zweiten Position des Nockens ist der Reibschluss gelöst.

Aus JP 2010 069565 A ist ein Robotergelenk bekannt. Ein Aktuator beinhaltet ein elektrostriktives Elastomer, das mit zugeführter elektrischer Energie verformt ist, und einen Schuh, der an dem Elastomer angebracht ist, um abhängig von der Form des Elastomers ein Ausgangselement zwischen einem Kontaktzustand und einem separaten Zustand umzuschalten. Ein Drehmomentsteuerungsteil steuert ein Drehmoment, das von einem Basiselement zu dem Ausgabeelement zu übertragen ist, durch Anlegen der elektrischen Energie an das elektrostriktive Elastomer. Wenn das Ausgangselement ein Drehmoment mit einem vorbestimmten oder größeren Drehmoment von außen in einem Zustand annimmt, in dem der Schuh in Kontakt mit dem Ausgangselement ist, dreht sich das Element in Bezug auf das Basiselement, während der Schuh an dem Ausgangselement reibt.

Es ist die Aufgabe der vorliegenden Erfindung, ein motorisiertes Gelenk für einen programmierbaren Bewegungsautomaten anzugeben, das ein präzises Einstellen zweier mittels des Gelenks verbundener Träger und ein zuverlässiges Arretieren der Träger relativ zueinander erlaubt.

Die Aufgabe wird durch ein motorisiertes Gelenk gelöst, das dadurch gekennzeichnet ist, dass zum Erzeugen oder zum Erhöhen der Reibkraft ein einstellbares Vorspannmittel oder ein Vorspannmittel, das eine Tellerfeder oder ein gewelltes und/oder elastisches und/oder zylinderförmig gebogenes Band insbesondere Blechband, oder einen geschlitzten Ring aufweist, vorhanden ist.

Die Erfindung hat den ganz besonderen Vorteil, dass ein präzises Abbremsen und Arretieren der Träger möglich ist, wobei die Bewegungsenergie der sich relativ zueinander bewegenden Träger und die Rotationsenergie der rotierenden Getriebebauteile unmittelbar und insbesondere unter Ausschluss der Abtriebswelle des Antriebsmotors, beispielsweise in ein Chassis oder ein Gehäuse, abgeleitet werden können. Die Abtriebswelle des Antriebsmotors ist auf diese Weise bei einem Abbremsvorgang zumindest teilweise von diesbezüglichen Kraft- und/oder Drehmomenteinwirkungen entkoppelt und kann daher dünner, leichter und besonders bauraumsparend ausgebildet sein.

Die Feststellvorrichtung kann insbesondere dazu dienen, das Gelenk in einem Notfall oder zum Durchführen einer Reparatur zu versteifen. Insbesondere kann die Feststellvorrichtung vorteilhaft dazu ausgebildet sein, die mittels des Gelenks verbundenen Träger im laufenden Betrieb relativ zueinander zunächst abzubremsen und dann zu arretieren.

Bei einer ganz besonders vorteilhaften Ausführung ist das Getriebe als Spannungswellengetriebe ausgebildet. Eine solche Ausführung hat den ganz besonderen Vorteil, dass ein besonders präzises Einstellen der beweglichen Träger relativ zueinander ermöglicht ist. Hierbei wird vorteilhaft ausgenutzt, dass Spannungswellengetriebe spielfrei sind und daher die vom Antriebsmotor erzeugten Drehmomente, insbesondere auch bei einer Richtungsumkehr, unmittelbar in eine entsprechende Relativbewegung der Träger übersetzt werden können. Alternativ kann das Getriebe beispielsweise als Planetengetriebe oder als Zykloidgetriebe ausgebildet sein. Bei einem Planentengetriebe kann beispielsweise ein Planetenträger als Zwischenelement fungieren, während ein Hohlrad als Abtriebselement fungiert. Es ist beispielsweise auch möglich, dass ein Hohlrad als Zwischenelement fungiert, während ein Planetenträger das Abtriebselement ist.

Insoweit kann vorteilhaft vorgesehen sein, dass das Antriebselement ein Wellengenerator des Spannungswellengetriebes ist und dass das Spannungswellengetriebe als Zwischenelement eine radialflexible, außenverzahnte Büchse aufweist, die mit einem starren, innenverzahnten Hohlrad, das als Abtriebselement fungiert, an wenigstens zwei Eingriffsstellen in Zahneingriff steht. Ein solches Spannungswellengetriebe kann insbesondere als Ringgetriebe ausgebildet sein.

Alternativ ist es auch möglich, dass das Antriebselement ein Wellengenerator des Spannungswellengetriebes ist und dass das Spannungswellengetriebe als Abtriebselement eine radialflexible, außenverzahnte Büchse aufweist, die mit einem starren, innenverzahnten Hohlrad, das als Zwischenelement fungiert, an wenigstens zwei Eingriffsstellen in Zahneingriff steht. Ein solches Spannungswellengetriebe kann vorteilhaft als Topfgetriebe ausgebildet sein, wobei die radialflexible, außenverzahnte Büchse durch die Wandung eines Flextopfes gebildet ist.

Bei einer ganz besonders vorteilhaften Ausführung lässt die Feststellvorrichtung im zugeschalteten Zustand bei Auftreten eines abtriebsseitigen Drehmoments mit einem Wert über einem vorgegebenen oder vorgebbaren Wert zur Vermeidung einer Beschädigung des Zwischenelements oder Abtriebselements oder der weiteren in Kraftfluss liegenden Bauteile des motorisierten Gelenks eine Bewegung des Zwischenelements oder des Abtriebselements oder des drehfest mit dem Zwischenelement oder dem Abtriebselement verbundenen Bauteils zu. Beispielsweise kann vorteilhaft vorgesehen sein, dass sich ein Sperrring beim Auftreten einer Überlast relativ zu dem zu arretierenden Bauteil, insbesondere unter Überwindung einer Reibkraft, drehen kann.

Der vorgegebene Wert entspricht vorzugsweise dem maximal zulässigen Betriebsdrehmoment, das an dem zu arretierenden Bauteil auftreten darf. Der Wert kann insbesondere auch unterhalb dieses Wertes liegen, um ein Sicherheitspolster zu implementieren. Insbesondere ist der vorgegebene Wert vorzugsweise derart gewählt, dass eine Beschädigung des Gelenks und/oder des Getriebes ausgeschlossen ist.

Eine solche Ausführung hat den ganz besonderen Vorteil, dass Drehmomentspitzen, die auf das Zwischenelement, das Abtriebselement oder die weiteren im Kraftfluss liegenden Bauteile wirken, abgebaut werden können, ohne dass es zu einer Beschädigung des motorisierten Gelenks kommt. Zu derartigen Drehmomentspitzen kann es insbesondere im zugeschalteten Zustand der Feststellvorrichtung kommen, wenn äußere Kräfte auf die mittels des motorisierten Gelenks verbundenen Träger einwirken. Auf diese Weise kann vorteilhaft eine Beschädigung des motorisierten Gelenks, insbesondere des Getriebes des motorisierten Gelenks, vermieden werden, ohne dass das motorisierte Gelenk, und insbesondere die Elemente des Getriebes, vorsorglich überdimensioniert werden müssten, um die oben genannten Drehmomentspitzen verkraften zu können. Insoweit kann das motorisierte Gelenk - und insbesondere dessen Getriebe - vorteilhaft bei gleicher Lebensdauer seiner Komponenten kompakt, kleinbauend und bauraumsparend ausgebildet werden.

Die Feststellvorrichtung kann vorteilhaft als reibschlüssige Bremse ausgebildet sein oder zumindest eine reibschlüssige Bremse aufweisen. Hierdurch kann in einfacher und zuverlässiger Weise das Abtriebselement oder das Zwischenelement in Stillstand gehalten werden, wobei jedoch beim Auftreten von besonders hohen Drehmomenten, insbesondere von Drehmomenten die einen vorgegebenen Wert überschreiten, ein Durchrutschen der reibschlüssigen Bremse erfolgt, so dass das Abtriebselement, das Zwischenelement und die weiteren im Kraftfluss liegenden Bauteile vor einer Beschädigung bewahrt bleiben.

Beispielsweise kann die Feststellvorrichtung eine Scheibenbremse aufweisen. Bei einer vorteilhaften Ausführung weist die Scheibenbremse eine Bremsscheibe auf, die drehfest mit dem Zwischenelement, dem Abtriebselement oder dem drehfest mit dem Zwischenelement oder dem Abtriebselement verbundenen Bauteil verbunden ist. Darüber hinaus kann ein Bremskrafterzeuger vorhanden sein, der auf die Bremsscheibe wirkt und der sich direkt oder indirekt an einem Gehäuse oder an einem Chassis des Getriebes und/oder des motorisierten Gelenks abstützt. Die Bremsscheibe kann vorteilhaft drehfest, jedoch in axialer Richtung verschiebbar auf einem mit dem Zwischenelement, dem Abtriebselement oder dem drehfest mit dem Zwischenelement oder dem Abtriebselement verbundenen Bauteil verbundenen Mitnehmer gelagert sein.

Der Bremskrafterzeuger kann beispielsweise in der Weise ausgebildet sein, dass er im zugeschalteten Zustand der Feststellvorrichtung ein Reibelement axial oder radial gegen die Bremsscheibe drückt. Insbesondere hierzu kann der Bremskrafterzeuger wenigstens einen Magneten, insbesondere einen Permanentmagneten und/oder einen Elektromagneten und/oder wenigstens ein Federelement aufweisen.

Bei einer besonderen Ausführung ist zum Lösen der Feststellvorrichtung eine, insbesondere elektrisch aktivierbare, Lösevorrichtung vorhanden. Beispielsweise kann die Lösevorrichtung einen Elektromagneten aufweisen, mittels dem das Reibelement von der Bremsscheibe, insbesondere gegen die Rückstellkraft eines Bremskrafterzeugers, entfernt werden kann.

Erfindungsgemäß weist die Feststellvorrichtung ein Sperrmittel auf, das reibschlüssig mit dem Zwischenelement, dem Abtriebselement oder dem drehfest mit dem Zwischenelement oder dem Abtriebselement verbundenen Bauteil verbunden ist. Das Sperrmittel weist ein Formschlussmittel auf, das im zugeschalteten Zustand der Feststellvorrichtung formschlüssig mit einem relativ zu einem Gehäuse oder einem Chassis des motorisierten Gelenks, insbesondere einem Gehäuse oder einem Chassis des Getriebes des motorisierten Gelenks, drehfesten Gegenformschlussmittel zusammenwirkt. Das Sperrmittel kann beispielsweise als Ring ausgebildet sein, der als Formschlussmittel wenigstens eine Ausnehmung aufweist, in die das Gegenformschlussmittel, beispielsweise in Form eines ausfahrbaren Sperrenstifts, eingreifen kann. In vorteilhafter Weise kann das Sperrmittel mehrere Formschlussmittel, beispielsweise mehrere Ausnehmungen, aufweisen, so dass ein Eingreifen des Gegensperrmittels in unterschiedlichen Drehstellungen des abzubremsenden Getriebebauteils ermöglicht ist.

Das Sperrmittel kann vorteilhaft, beispielsweise als Ring, koaxial zu dem Zwischenelement, dem Abtriebselement oder dem drehfest mit dem Zwischenelement oder dem Abtriebselement verbundenen Bauteil angeordnet sein.

Zum Erzeugen oder zum Erhöhen der Reibkraft zwischen dem Sperrmittel einerseits und dem Zwischenelement oder dem Abtriebselement oder dem drehfest mit dem Zwischenelement oder Abtriebselement verbundenen Bauteil andererseits kann vorteilhaft ein Vorspannmittel vorhanden sein. Beispielsweise kann das Vorspannmittel in der Weise ausgebildet sein, dass es das Sperrmittel, insbesondere axial, gegen das Zwischenelement, das Abtriebselement oder das drehfest mit dem Zwischenelement oder dem Abtriebselement verbundenen Bauteil drückt.

Alternativ kann beispielsweise auch vorgesehen sein, dass das Sperrmittel über das Vorspannmittel reibschlüssig mit dem Zwischenelement, dem Abtriebselement oder mit dem drehfest mit dem Zwischenelement oder dem Abtriebselement verbundenen Bauteil verbunden ist und sich das Vorspannmittel einerseits an dem Sperrmittel und andererseits an dem Zwischenelement, dem Abtriebselement oder dem drehfest mit dem Zwischenelement oder dem Abtriebselement verbundenen Bauteil abstützt. Das Vorspannmittel kann beispielsweise wenigstens ein vorgespanntes oder vorspannbares Federelement beinhalten.

Insbesondere kann das Vorspannmittel vorteilhaft als einstellbares Vorspannmittel ausgebildet sein. Hierzu kann beispielsweise eine Spannschraube vorhanden sein, mittels der die Vorspannung der Feder eingestellt werden kann.

Insbesondere kann das Vorspannmittel wenigstens ein Federelement aufweisen, wobei wenigstens ein Teil der Reibkraft durch eine Rückstellkraft des vorgespannten Federelements bewirkt wird.

Das Vorspannmittel kann beispielsweise eine Tellerfeder aufweisen. Bei einer ganz besonders vorteilhaften Ausführung weist das Vorspannmittel ein gewelltes und/oder elastisches und/oder zylinderförmig gebogenes Band, insbesondere Blechband auf. Das Band kann insbesondere radial zwischen dem Sperrmittel einerseits und dem Zwischenelement oder dem Abtriebselement oder dem drehfest mit dem Zwischenelement oder dem Abtriebselement verbundenen Bauteil andererseits angeordnet sein. Solange ein vorgegebener Wert des Drehmoments nicht überschritten wird, stellt das vorgespannte Band reibschlüssig eine drehfeste Verbindung zwischen dem Sperrmittel einerseits und dem Zwischenelement, dem Abtriebselement oder dem drehfest mit dem Zwischenelement oder dem Abtriebselement verbundenen Bauteil andererseits her. Wird der vorgegebene Wert überschritten, kann sich das Sperrelement die Reibkraft überwindend relativ zu dem Zwischenelement, dem Abtriebselement oder dem drehfest mit dem Zwischenelement oder dem Abtriebselement verbundenen Bauteil drehen. In ähnlicher Weise kann das Vorspannmittel alternativ auch als vorgespannter, geschlitzter Ring ausgebildet und angeordnet sein.

Wie bereits erwähnt, kann vorteilhaft vorgesehen sein, dass das Gegenformschlussmittel einen, insbesondere entlang seiner Längserstreckungsrichtung radial oder axial, bewegbaren Sperrenstift aufweist, dessen freies Ende in zugeschaltetem Zustand der Feststellvorrichtung in eine Rastausnehmung des Formschlussmittels eingreift.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an das Abtriebselement des Getriebes angekoppelt ist. Die zwei mittels des motorisierten Gelenks beweglich verbundenen Träger können beispielsweise Teil eines Roboterarmes sein.

Bei einer besonderen Ausführung weist das Gelenk zwei relativ zueinander bewegliche Gehäuseteile aufweist, wobei der Antriebsmotor in einem der Gehäuseteile angeordnet ist und das Getriebe in dem anderen Gehäuseteil angeordnet ist. Alternativ oder zusätzlich kann auch vorgesehen sein, dass ein Teil des Getriebes in einem der Gehäuseteile angeordnet ist und ein anderer Teil des Getriebes in dem anderen Gehäuseteil angeordnet ist, oder dass die Feststellvorrichtung in demselben Gehäuseteil angeordnet ist, wie das Getriebe oder wenigstens wie das unmittelbar abzubremsende Bauteil des Getriebes. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente sowohl des Antriebsmotors, als auch des Getriebes und der Feststellvorrichtung aufnehmen muss.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil fungiert und/oder dass ein Gehäuse eines zweiten Trägers zusätzlich auch als zweites Gehäuseteil fungiert.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, stets senkrecht zu dem anderen Träger angeordnet ist.

Insbesondere kann das das Gelenk als Scharniergelenk ausgebildet sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines motorisierten Gelenks zum Verbinden von zwei relativ zueinander beweglichen Trägern,
- Fig. 2: ein zweites Ausführungsbeispiel eines motorisierten Gelenks zum Verbinden von zwei relativ zueinander befindlichen Trägern,
- Fig. 3: ein drittes Ausführungsbeispiel zum Verbinden von zwei relativ zueinander beweglichen Trägern,
- Fig. 4: ein viertes Ausführungsbeispiel eines motorisierten Gelenks zum Verbinden von zwei relativ zueinander beweglichen Trägern,
- Fig. 5: ein fünftes Ausführungsbeispiel eines motorisierten Gelenks zum Verbinden von zwei relativ zueinander beweglichen Trägern,
- Fig. 6: ein sechstes Ausführungsbeispiel eines motorisierten Gelenks zum Verbinden von zwei relativ zueinander befindlichen Trägern,
- Fig. 7: ein siebentes Ausführungsbeispiel zum Verbinden von zwei relativ zueinander beweglichen Trägern,
- Fig. 8: ein achtes Ausführungsbeispiel eines motorisierten Gelenks zum Verbinden von zwei relativ zueinander beweglichen Trägern, und
- Fig. 9: bis 15 unterschiedliche Ausführungsbeispiele eines motorisierten Gelenks mit einem Vorspannmittel.

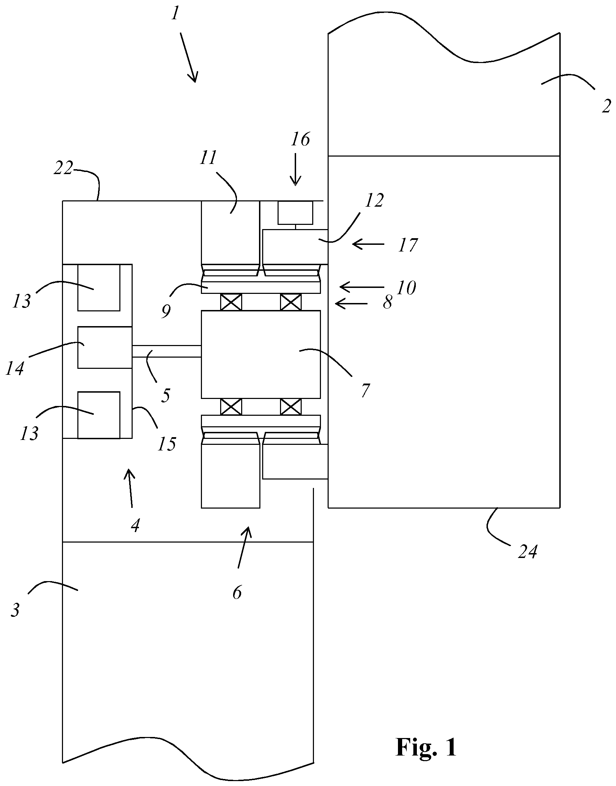

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten. Das motorisierte Gelenk 1 beinhaltet einen Antriebsmotor 4 mit einer Abtriebswelle 5, sowie ein dem Antriebsmotor 4 triebtechnisch nachgeschaltes Getriebe 6. Das Getriebe 6 ist als Spannungswellengetriebe ausgebildet.

Das motorisierte Gelenk 1 weist ein erstes Gehäuseteil 24 und ein zweites Gehäuseteil 22 auf. Das erste Gehäuseteil 24 ist starr mit dem ersten Träger 2 verbunden, während das zweite Gehäuseteil 22 starr mit dem zweiten Träger 3 verbunden ist. Es ist alternativ auch möglich, dass ein Gehäuse des ersten Trägers zusätzlich auch als erstes Gehäuseteil fungiert und/oder dass ein Gehäuse des zweiten Trägers zusätzlich auch als zweites Gehäuseteil fungiert.

Das Getriebe 6 weist ein drehfest mit der Abtriebswelle 5 des Antriebsmotors 4 verbundenes Antriebselement 7, nämlich einen Wellengenerator auf. Der Wellengenerator ist mittels eines radialflexiblen Wälzlagers 8 in einer radialflexiblen, außenverzahnten Büchse 9 gelagert, die ein Zwischenelement 10 des Getriebes 6 bildet. Das Antriebselement 7 ist elliptisch ausgebildet und überträgt seine elliptische Form über das radialflexible Wälzlager 8 auf die radialflexible außenverzahnte Büchse 9, die auf einander gegenüberliegenden Seiten entlang der Hochachse der Ellipse in Zahneingriff mit einem ersten, starren, innenverzahnten Stützring 11 steht. Der erste Stützring 11 ist über das zweite Gehäuseteil 22 drehfest mit dem zweiten Träger 3 verbunden. Der erste Stützring 11 kann insbesondere dieselbe Zähnezahl aufweisen, wie die radialflexible außenverzahnte Büchse 9.

Darüber hinaus weist das Getriebe 6 einen zweiten starren, innenverzahnten Stützring 12 auf, der ebenfalls in Zahneingriff mit der radialflexiblen außenverzahnten Büchse 9 steht. Der zweite Stützring 12 weist eine höhere Anzahl von Zähnen auf, als die radialflexible außenverzahnte Büchse 9, so dass es bei einer Drehung des Antriebselements 7 automatisch zu einer Relativdrehung des zweiten Stützrings 12 relativ zu der radialflexiblen außenverzahnten Büchse 9 kommt.

Der zweite Stützring 12 ist über das erste Gehäuseteil 24 drehfest mit dem ersten beweglichen Träger 2 verbunden.

Der Antriebsmotor 4 beinhaltet einen Stator 13 und einen Rotor 14. Der Rotor 14 ist drehfest mit der Abtriebswelle 5 verbunden. Ein Antriebsmotorgehäuse 15 ist drehfest an dem zweiten Gehäuseteil 22 befestigt. Der Stator 13 ist ortsfest in dem Antriebsmotorgehäuse 15 angeordnet.

Mittels des Antriebsmotors 4 kann das Antriebselement 7 in Rotation versetzt werden, was zu einer Relativdrehung des mit dem ersten Träger 2 verbundenen zweiten Stützrings 12 führt, so dass sich der erste Träger 2 und der zweite Träger 3 relativ zueinander bewegen.

Das motorisierte Gelenk 1 weist außerdem eine Feststellvorrichtung 16 auf, die dazu ausgebildet und angeordnet ist, den als Abtriebselement 17 fungierenden zweiten Stützring 12 abzubremsen und zu arretieren.

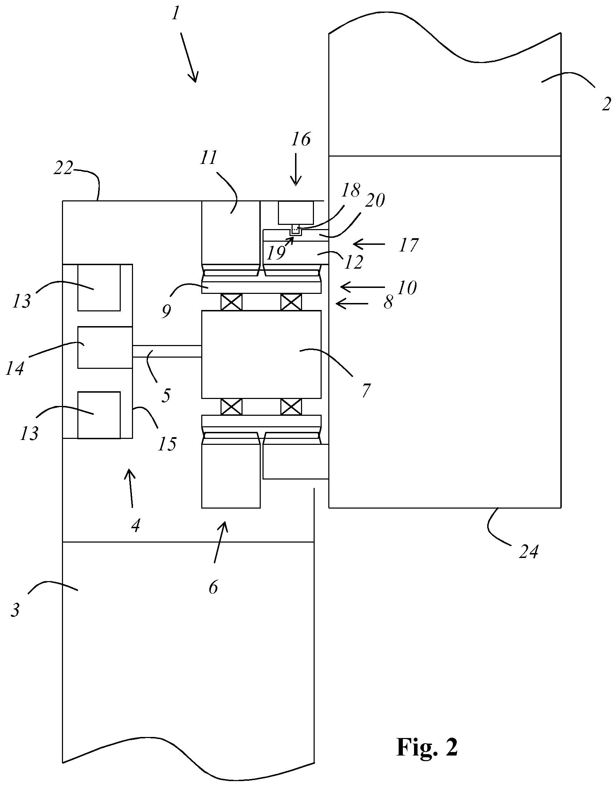

Dies kann, wie in Figur 2 schematisch dargestellt ist, beispielsweise dergestalt erfolgen, dass ein in radialer Richtung beweglicher Sperrenstift 18 in eine Rastausnehmung 19 eines reibschlüssig mit dem zweiten Stützring 12 verbundenen Sperrmittels 20 eingreift. Zum Lösen der Feststellvorrichtung wird der Sperrenstift 18, beispielsweise durch Magnetkraft, radial nach außen bewegt, wodurch das freie Ende des Sperrenstiftes 18 und die Rastausnehmung 19 außer Eingriff kommen.

Die Feststellvorrichtung 16 ist drehfest in dem zweiten Gehäuseteil 22 und drehfest zu dem zweiten Träger 3 angeordnet. Insoweit kann ein bei einem Bremsvorgang auftretendes Bremsmoment unmittelbar auf das zweite Gehäuseteil 22 abgeleitet werden, ohne dass es zu einer Belastung der übrigen Bauteile des Getriebes 6 kommt. Insbesondere ist die Abtriebswelle 5 des Antriebsmotors 4 bei einem Abbremsvorgang von den durch das Abbremsen hervorgerufenen Drehmomenten entkoppelt.

Das Sperrmittel 20 weist auf seinem Außenumfang verteilt mehrere Rastausnehmungen 19 auf, so dass ein Eingreifen des Sperrenstiftes in unterschiedlichen Drehstellungen des zweiten Stützrings 12 ermöglicht ist.

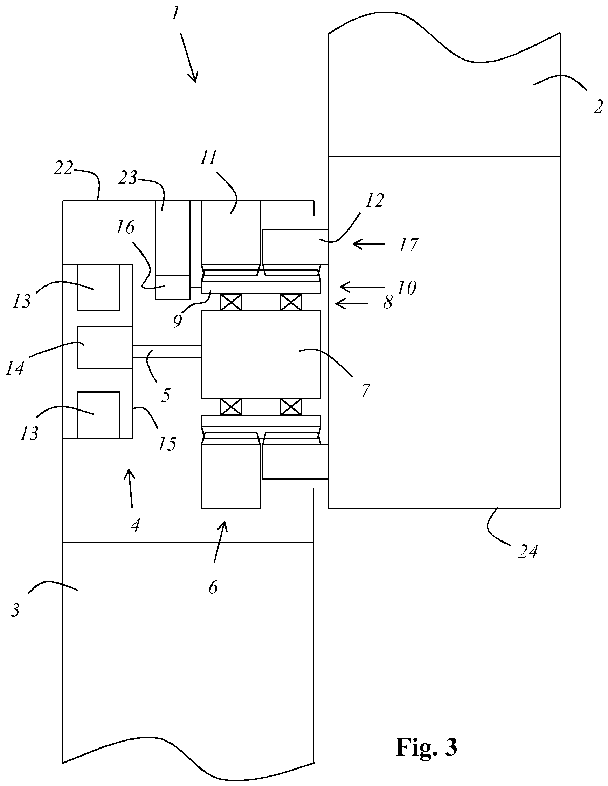

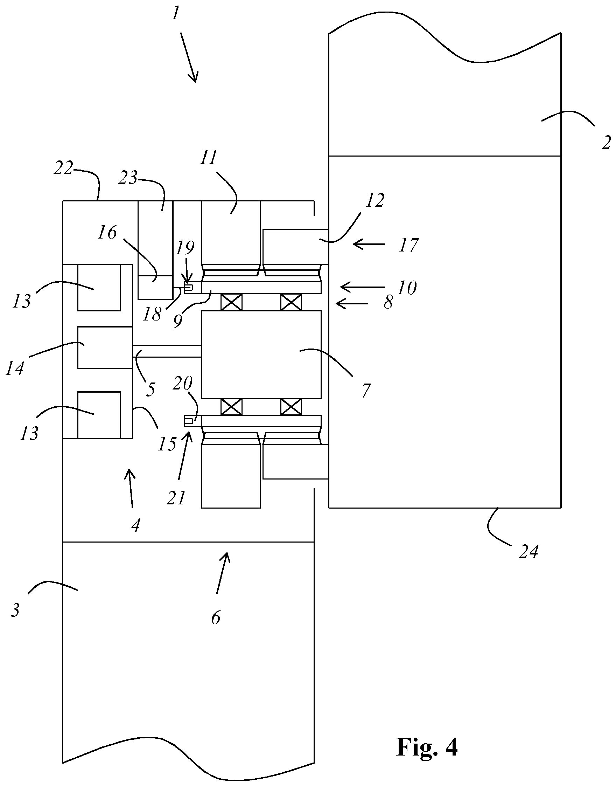

Figur 3 zeigt ein drittes Ausführungsbeispiel eines erfindungsgemäßen motorisierten Gelenks. Bei dieser Ausführung wirkt die mittels eines Halters 23 drehfest mit dem zweiten Gehäuseteil 22 verbundene Feststellvorrichtung 16 auf die als Zwischenelement 10 fungierende radialflexible außenverzahnte Büchse 9. Dies kann, wie schematisch in Figur 4 dargestellt, beispielsweise in der Weise realisiert sein, dass ein axial beweglicher Sperrenstift 18 in eine Rastausnehmung 19 eines als Sperrring 21 ausgebildeten Sperrmittels 20, das reibschlüssig mit der radialflexiblen, außenverzahnten Büchse 9 verbunden ist, eingreift. Zum Lösen der Sperrvorrichtung wird das freie Ende des Sperrenstiftes 18 axial aus der Rastausnehmung 19 heraus bewegt.

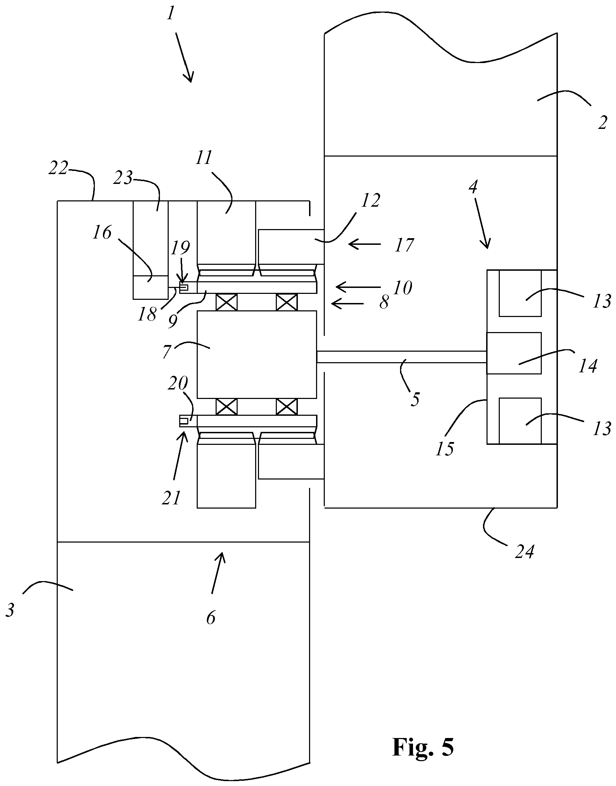

Figur 5 zeigt ein fünftes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist der Antriebsmotor 4 in dem ersten Gehäuseteil 24 angeordnet, während das Getriebe 6 und die Feststellvorrichtung 16 in dem zweiten Gehäuseteil 22 angeordnet sind.

Der erste Stützring 11 ist über das zweite Gehäuseteil 22 mit dem zweiten Träger 3 starr verbunden, während der zweite Stützring über das erste Gehäuseteil 24 starr mit dem ersten Träger 2 verbunden ist.

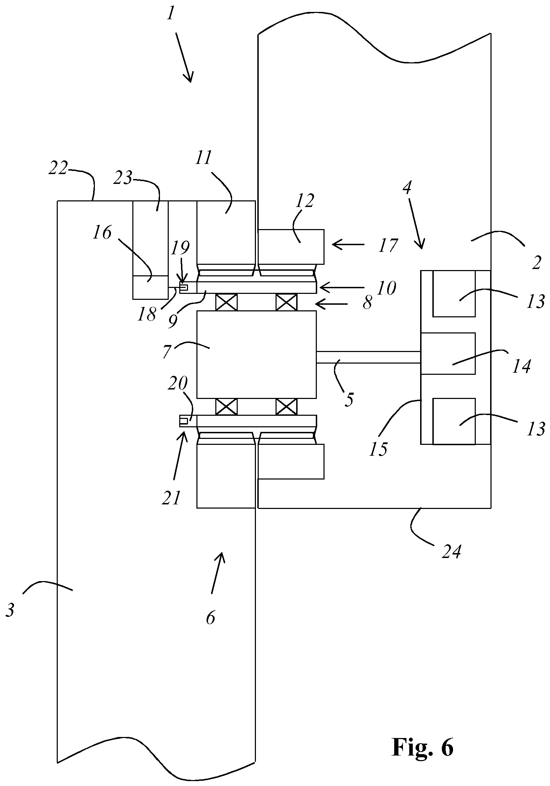

Figur 6 zeigt ein sechstes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel sind der Antriebsmotor 4 und ein Teil des Getriebes 6 in dem ersten Gehäuseteil 24 angeordnet, während der andere Teil des Getriebes 6 und die Feststellvorrichtung 16 in dem zweiten Gehäuseteil 22 angeordnet sind.

Bei diesem Ausführungsbeispiel fungiert ein Gehäuse des ersten Trägers zusätzlich auch als erstes Gehäuseteil 24 und ein Gehäuse des zweiten Trägers zusätzlich auch als zweites Gehäuseteil 22.

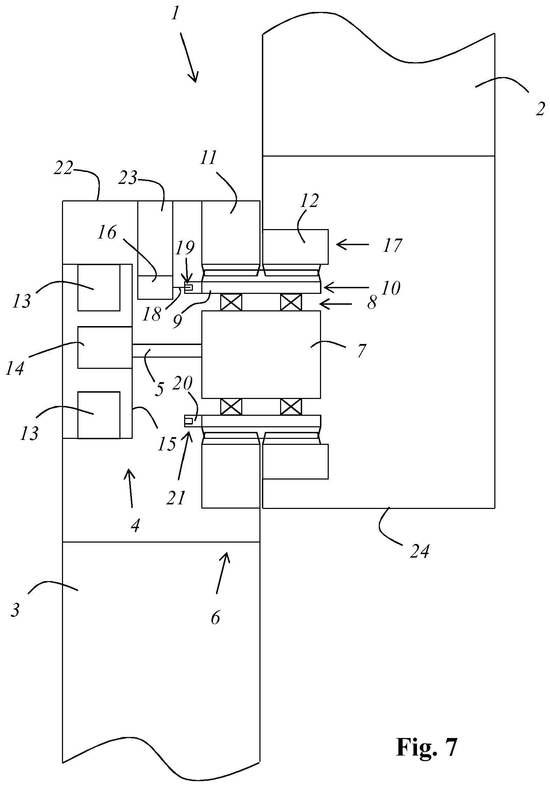

Figur 7 zeigt ein siebentes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel ist ein Teil des Getriebes 6 in dem ersten Gehäuseteil 24 angeordnet, während der Antriebsmotor 4 und der andere Teil des Getriebes 6 sowie die Feststellvorrichtung 16 in dem zweiten Gehäuseteil 22 angeordnet sind.

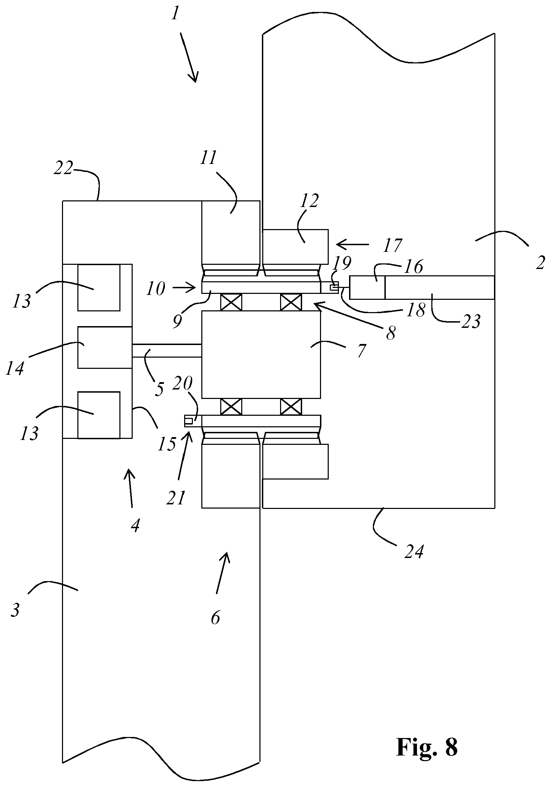

Figur 8 zeigt ein achtes Ausführungsbeispiel eines motorisierten Gelenks 1 zum gelenkigen Verbinden eines ersten Trägers 2 mit einem zweiten Träger 3 eines programmierbaren Bewegungsautomaten. Bei diesem Ausführungsbeispiel sind ein Teil des Getriebes 6 und die Feststellvorrichtung 16 in dem ersten Gehäuseteil 24 angeordnet, während der Antriebsmotor 4 und der andere Teil des Getriebes 6 in dem zweiten Gehäuseteil 22 angeordnet sind.

Bei diesem Ausführungsbeispiel fungiert ein Gehäuse des ersten Trägers zusätzlich auch als erstes Gehäuseteil 24 und ein Gehäuse des zweiten Trägers zusätzlich auch als zweites Gehäuseteil 22.

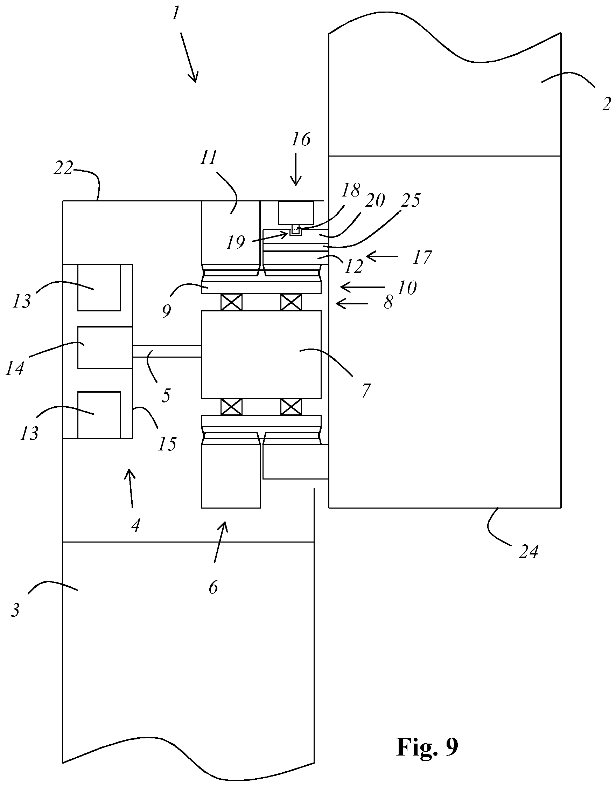

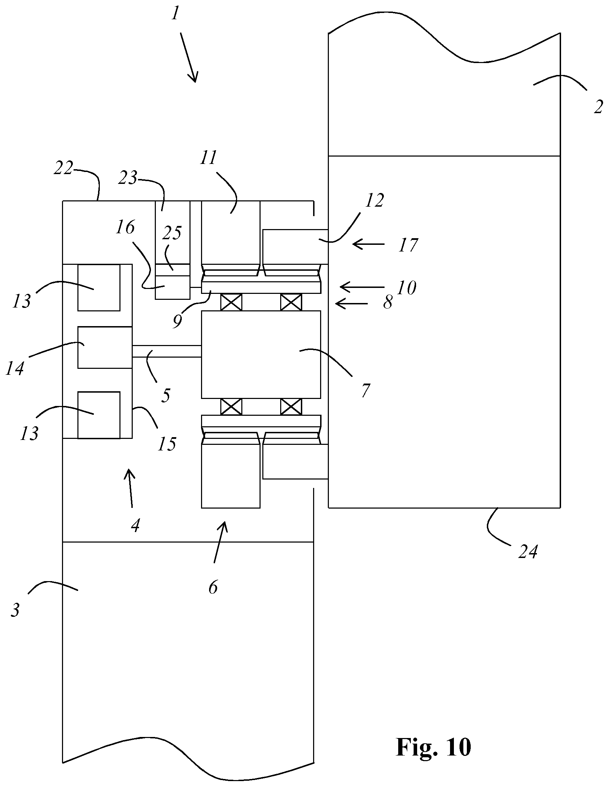

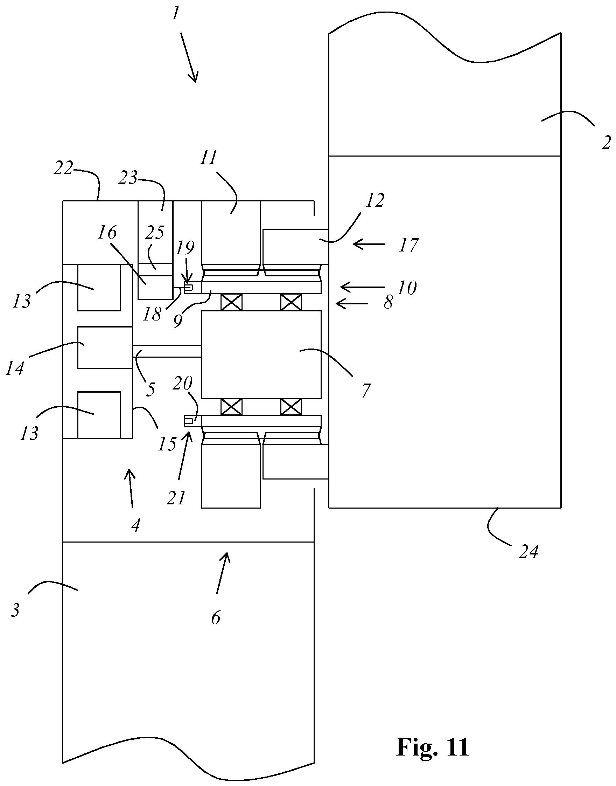

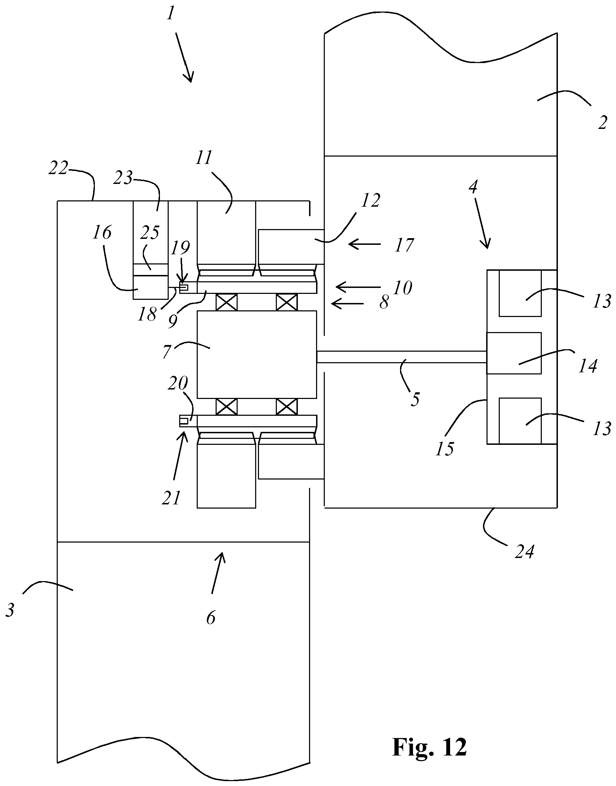

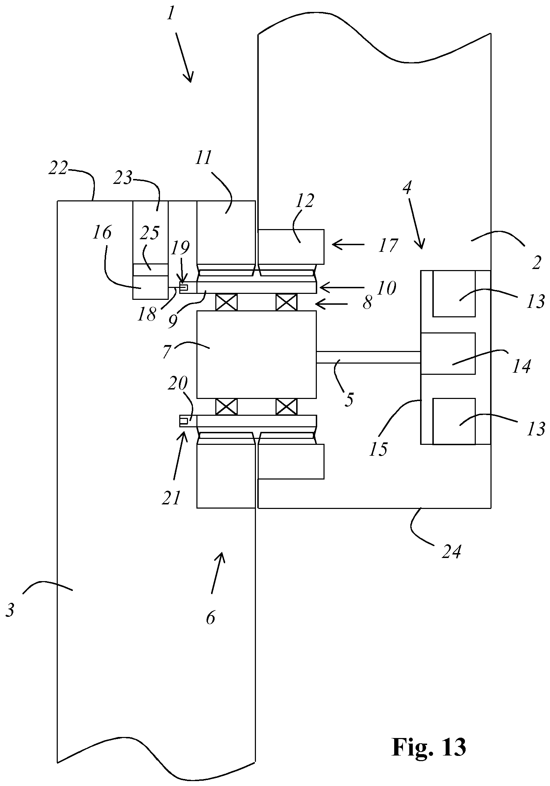

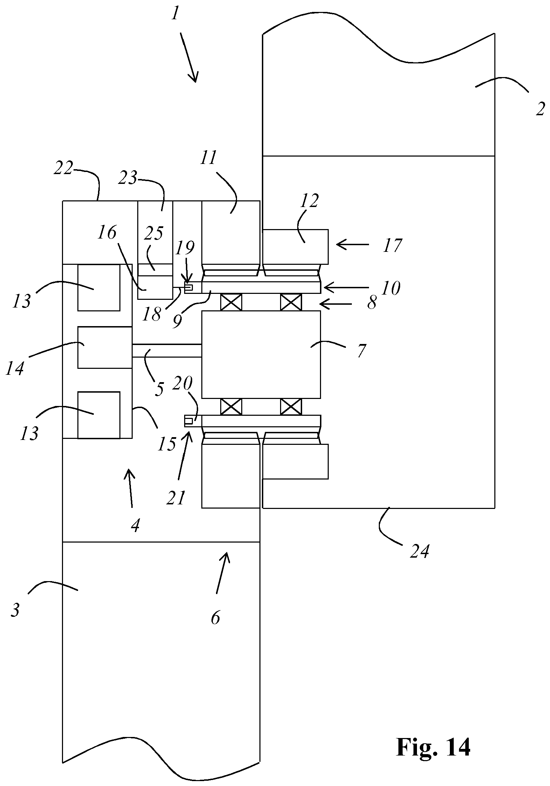

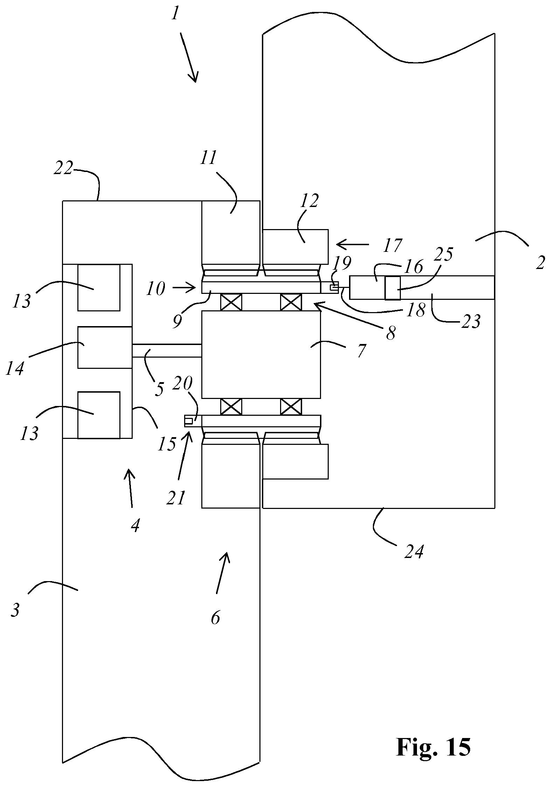

Bei den dargestellten Ausführungsbeispielen kann vorteilhaft ein, insbesondere einstellbares, Vorspannmittel 25 zum Erzeugen oder zum Erhöhen der Reibkraft zwischen dem Sperrmittel 20 einerseits und dem abzubremsenden Getriebebauteils andererseits vorhanden sein, wie dies die Figuren 9 bis 15 illustrieren. Die Ausführungen der Figuren 9 bis 15 entsprechen im Übrigen den Ausführungen gemäß den Figuren 2 bis 8. Das Vorspannmittel 25 kann beispielsweise eine Tellerfeder oder ein gewelltes und/oder elastisches und/oder zylinderförmig gebogenes Band oder einen geschlitzten Ring aufweisen.

### Bezugszeichenliste:

- 1: Motorisiertes Gelenk
- 2: Erster Träger
- 3: Zweiter Träger
- 4: Antriebsmotor
- 5: Abtriebswelle
- 6: Getriebe
- 7: Antriebselement
- 8: Radialflexibles Wälzlager
- 9: Radialflexible, außenverzahnte Büchse
- 10: Zwischenelement
- 11: Erster Stützring
- 12: Zweiter Stützring
- 13: Stator
- 14: Rotor
- 15: Antriebsmotorgehäuse
- 16: Feststellvorrichtung
- 17: Abtriebselement
- 18: Sperrenstift
- 19: Rastausnehmung
- 20: Sperrmittel
- 21: Sperrring
- 22: Zweites Gehäuseteil
- 23: Halter
- 24: Erstes Gehäuseteil
- 25: Vorspannmittel

## Patentansprüche

1. Motorisiertes Gelenk (1) zum Verbinden von zwei relativ zueinander beweglichen Trägern (2, 3) eines programmierbaren Bewegungsautomaten, das einen Antriebsmotor (4) und ein dem Antriebsmotor (4) triebtechnisch nachgeschaltetes Getriebe (6) sowie eine Feststellvorrichtung (16) aufweist, wobei das Getriebe (6) ein drehfest mit einer Abtriebswelle (5) des Antriebsmotors (4) verbundenes Antriebselement (7), wenigstens ein Zwischenelement (10), das eine andere Drehgeschwindigkeit aufweist, als das Antriebselement (7), sowie ein Abtriebselement (17) aufweist, wobei die Feststellvorrichtung (16) dazu ausgebildet und angeordnet ist, unmittelbar das Zwischenelement (10), das Abtriebselement (17) oder ein drehfest mit dem Zwischenelement (10) oder dem Abtriebselement (17) verbundenes Bauteil abzubremsen und zu arretieren, und wobei die Feststellvorrichtung (16) ein reibschlüssig mit dem Zwischenelement (10), dem Abtriebselement (17) oder dem drehfest mit dem Zwischenelement (10) oder dem Abtriebselement (17) verbundenen Bauteil verbundenes Sperrmittel (20) aufweist, welches wenigstens ein Formschlussmittel aufweist, das im zugeschalteten Zustand der Feststellvorrichtung (16) formschlüssig mit einem relativ zu einem Gehäuse oder einem Chassis drehfesten Gegenformschlussmittel zusammen wirkt, **dadurch gekennzeichnet, dass** zum Erzeugen oder zum Erhöhen der Reibkraft ein einstellbares Vorspannmittel (25) oder ein Vorspannmittel (25), das eine Tellerfeder oder ein gewelltes und/oder elastisches und/oder zylinderförmig gebogenes Band, insbesondere Blechband, oder einen geschlitzten Ring aufweist, vorhanden ist.

2. Motorisiertes Gelenk (1) nach Anspruch 1, **dadurch gekennzeichnet, dass**
a. das Getriebe (6) als Spannungswellengetriebe ausgebildet ist, oder dass
b. das Getriebe (6) als Spannungswellengetriebe ausgebildet ist und das Antriebselement (7) ein Wellengenerator ist, wobei das Spannungswellengetriebe eine radialflexible, außenverzahnte Büchse (9) aufweist, die mit einem starren, innenverzahnten Hohlrad an wenigsten zwei Eingriffsstellen in Zahneingriff steht, oder dass
c. das Getriebe (6) als Spannungswellengetriebe ausgebildet ist und das Antriebselement (7) ein Wellengenerator ist, wobei das Spannungswellengetriebe als Zwischenelement (10) eine radialflexible, außenverzahnte Büchse (9) aufweist, die mit einem starren, innenverzahnten Hohlrad, das als Abtriebselement (17) fungiert, an wenigsten zwei Eingriffsstellen in Zahneingriff steht, oder dass
d. das Getriebe (6) als Spannungswellengetriebe ausgebildet ist und das Antriebselement (7) ein Wellengenerator ist, wobei das Spannungswellengetriebe als Abtriebselement (17) eine radialflexible, außenverzahnte Büchse (9) aufweist, die mit einem starren, innenverzahnten Hohlrad, das als Zwischenelement (10) fungiert, an wenigsten zwei Eingriffsstellen in Zahneingriff steht, oder dass
e. das Getriebe (6) als Spannungswellengetriebe in Form eines Topfgetriebes ausgebildet ist oder dass das Getriebe (6) als Spannungswellengetriebe in Form eines Ringgetriebes ausgebildet ist.

3. Motorisiertes Gelenk (1) nach Anspruch 1 oder 2, **dadurch gekennzeichnet, dass**
a. die Feststellvorrichtung (16) im zugeschalteten Zustand bei Auftreten eines abtriebsseitigen Drehmomentes mit einem Wert über einem vorgegebenen oder vorgebbaren Wert zur Vermeidung einer Beschädigung des Abtriebselements (17) und der weiteren im Kraftfluss liegenden Bauteile des motorisierten Gelenks (1) eine Bewegung des Abtriebselements (17) oder des Zwischenelements (10) oder des drehfest mit dem Zwischenelement (10) oder dem Abtriebselement (17) verbundenen Bauteils zulässt, oder dass
b. die Feststellvorrichtung (16) im zugeschalteten Zustand bei Auftreten eines abtriebsseitigen Drehmomentes mit einem Wert über einem vorgegebenen oder vorgebbaren Wert zur Vermeidung einer Beschädigung des Abtriebselements (17) und der weiteren im Kraftfluss liegenden Bauteile des motorisierten Gelenks (1) eine Bewegung des Abtriebselements (17) oder des Zwischenelements (10) oder des drehfest mit dem Zwischenelement (10) oder dem Abtriebselement (17) verbundenen Bauteils zulässt, wobei der vorgegebene Wert dem maximal zulässigen Betriebsdrehmoment, das an dem zu arretierenden Bauteil auftreten darf entspricht und/oder dass der vorgegebene Wert derart gewählt, dass eine Beschädigung des Gelenks (1) und/oder des Getriebes (6) ausgeschlossen ist.

4. Motorisiertes Gelenk (1) nach einem der Ansprüche 1 bis 3, **dadurch gekennzeichnet, dass** die Feststellvorrichtung als reibschlüssige Bremse ausgebildet ist oder eine reibschlüssige Bremse aufweist.

5. Motorisiertes Gelenk (1) nach einem der Ansprüche 1 bis 4, **dadurch gekennzeichnet, dass**
a. die Feststellvorrichtung (16) eine Scheibenbremse aufweist, oder dass
b. die Feststellvorrichtung (16) eine Scheibenbremse aufweist und eine Bremsscheibe vorhanden ist, die drehfest mit dem Zwischenelement (10), dem Abtriebselement (17) oder dem drehfest mit dem Zwischenelement (10) oder dem Abtriebselement (17) verbundenen Bauteil verbunden ist, und dass ein Bremskrafterzeuger vorhanden ist, der auf die Bremsscheibe wirkt und sich direkt oder indirekt an einem Gehäuse oder einem Chassis abstützt, oder dass
c. die Feststellvorrichtung (16) eine Scheibenbremse aufweist und eine Bremsscheibe vorhanden ist, die drehfest mit dem Zwischenelement (10), dem Abtriebselement (17) oder dem drehfest mit dem Zwischenelement (10) oder dem Abtriebselement (17) verbundenen Bauteil verbunden ist, und dass ein Bremskrafterzeuger vorhanden ist, der auf die Bremsscheibe wirkt und sich direkt oder indirekt an einem Gehäuse oder einem Chassis abstützt, wobei die Bremsscheibe drehfest, jedoch in axialer Richtung verschiebbar auf einem mit dem Zwischenelement, dem Abtriebselement oder dem drehfest mit dem Zwischenelement oder dem Abtriebselement verbundenen Bauteil verbundenen Mitnehmer gelagert ist, oder dass
d. die Feststellvorrichtung (16) eine Scheibenbremse aufweist und eine Bremsscheibe vorhanden ist, die drehfest mit dem Zwischenelement (10), dem Abtriebselement (17) oder dem drehfest mit dem Zwischenelement (10) oder dem Abtriebselement (17) verbundenen Bauteil verbunden ist, und dass ein Bremskrafterzeuger vorhanden ist, der auf die Bremsscheibe wirkt und sich direkt oder indirekt an einem Gehäuse oder einem Chassis abstützt, wobei der Bremskrafterzeuger im zugeschalteten Zustand der Feststellvorrichtung ein Reibelement axial gegen die Bremsscheibe drückt, oder dass
e. die Feststellvorrichtung (16) eine Scheibenbremse aufweist und eine Bremsscheibe vorhanden ist, die drehfest mit dem Zwischenelement (10), dem Abtriebselement (17) oder dem drehfest mit dem Zwischenelement (10) oder dem Abtriebselement (17) verbundenen Bauteil verbunden ist, und dass ein Bremskrafterzeuger vorhanden ist, der auf die Bremsscheibe wirkt und sich direkt oder indirekt an einem Gehäuse oder einem Chassis abstützt, wobei der Bremskrafterzeuger im zugeschalteten Zustand der Feststellvorrichtung ein Reibelement radial gegen die Bremsscheibe drückt, oder dass
f. die Feststellvorrichtung (16) eine Scheibenbremse aufweist und eine Bremsscheibe vorhanden ist, die drehfest mit dem Zwischenelement (10), dem Abtriebselement (17) oder dem drehfest mit dem Zwischenelement (10) oder dem Abtriebselement (17) verbundenen Bauteil verbunden ist, und dass ein Bremskrafterzeuger vorhanden ist, der auf die Bremsscheibe wirkt und sich direkt oder indirekt an einem Gehäuse oder einem Chassis abstützt, wobei der Bremskrafterzeuger wenigstens einen Magneten, insbesondere einen Permanentmagneten und/oder einen Elektromagneten, und/oder wenigstens ein Federelement aufweist.

6. Motorisiertes Gelenk (1) nach einem der Ansprüche 1 bis 5, **dadurch gekennzeichnet, dass**
a. zum Lösen der Feststellvorrichtung (16) eine Lösevorrichtung vorhanden ist, oder dass
b. zum Lösen der Feststellvorrichtung (16) eine Lösevorrichtung vorhanden ist, die elektrisch aktivierbar ist, oder dass
c. zum Lösen der Feststellvorrichtung (16) eine Lösevorrichtung vorhanden ist, die einen Elektromagneten aufweist.

7. Motorisiertes Gelenk (1) nach einem der Ansprüche 1 bis 6, **dadurch gekennzeichnet, dass** das Sperrmittel koaxial zu dem Zwischenelement (10), dem Abtriebselement (17) oder dem drehfest mit dem Zwischenelement (10) oder dem Abtriebselement (17) verbundenen Bauteil angeordnet ist.

8. Motorisiertes Gelenk (1) nach einem der Ansprüche 1 bis 7, **dadurch gekennzeichnet, dass**
a. das Vorspannmittel (25) das Sperrmittel (20), insbesondere axial, gegen das Zwischenelement (10), das Abtriebselement (17) oder das drehfest mit dem Zwischenelement (10) oder dem Abtriebselement (17) verbundene Bauteil drückt, oder dass
b. das Sperrmittel über das Vorspannmittel (25) reibschlüssig mit dem Zwischenelement (10), dem Abtriebselement (17) oder dem drehfest mit dem Zwischenelement (10) oder dem Abtriebselement (17) verbundenen Bauteil verbunden ist und sich das Vorspannmittel einerseits an dem Sperrmittel (20) und andererseits an dem Zwischenelement (10), dem Abtriebselement (17) oder dem drehfest mit dem Zwischenelement (10) oder dem Abtriebselement (17) verbundenen Bauteil abstützt.

9. Motorisiertes Gelenk (1) nach einem der Ansprüche 1 bis 8, **dadurch gekennzeichnet, dass** das Gegenformschlussmittel einen radial bewegbaren Sperrenstift aufweist, dessen freies Ende in zugeschaltetem Zustand der Feststellvorrichtung (16) in eine Rastausnehmung (19) des Formschlussmittels eingreift.

10. Motorisiertes Gelenk (1) nach einem der Ansprüche 1 bis 9, **dadurch gekennzeichnet, dass** das Gelenk zwei relativ zueinander bewegliche Gehäuseteile aufweist, wobei
a. der Antriebsmotor (4) in einem der Gehäuseteile angeordnet ist und das Getriebe (6) in dem anderen Gehäuseteil angeordnet ist, oder dass
b. ein Teil des Getriebes (6) in einem der Gehäuseteile angeordnet ist und ein anderer Teil des Getriebes (6) in dem anderen Gehäuseteil angeordnet ist, oder dass
c. die Feststellvorrichtung (16) in demselben Gehäuseteil angeordnet ist, wie das Getriebe (6) oder wenigstens wie das unmittelbar abzubremsende Bauteil des Getriebes (6).

11. Motorisiertes Gelenk (1) nach einem der Ansprüche 1 bis 10, **dadurch gekennzeichnet, dass**
a. das Gelenk dazu ausgebildet ist, zwei Träger (2, 3) derart zu verbinden, dass die Ebene, in der sich einer der Träger (2, 3) bewegt, und die Ebene, in der sich der andere Träger (2, 3) bewegt, stets parallel zueinander angeordnet sind, oder dass
b. das Gelenk als Scharniergelenk ausgebildet ist, oder dass
c. das Gelenk dazu ausgebildet ist, zwei Träger derart zu verbinden, dass die Ebene, in der sich einer der Träger (2, 3) bewegt, stets senkrecht zu dem anderen Träger (2, 3) angeordnet ist.

12. Programmierbarer Bewegungsautomat mit zwei mittels eines motorisierten Gelenks (1) nach einem der Ansprüche 1 bis 11 relativ zueinander beweglich verbundenen Trägern.

13. Programmierbarer Bewegungsautomat nach Anspruch 12, **dadurch gekennzeichnet, dass** einer der Träger (2, 3) direkt oder indirekt drehfest mit einem Stator (13) des Antriebsmotors (4) und/oder einem Antriebsmotorgehäuse des Antriebsmotors (4) verbunden ist und dass der andere Träger (2, 3) drehfest an das Abtriebselement (17) des Getriebes (6) angekoppelt ist.

14. Programmierbarer Bewegungsautomat nach Anspruch 12 oder 13, **dadurch gekennzeichnet, dass** die zwei mittels des motorisierten Gelenks (1) beweglich verbundenen Träger (2, 3) Teil eines Roboterarmes sind.

15. Programmierbarer Bewegungsautomat nach einem der Ansprüche 12 bis 14, **dadurch gekennzeichnet, dass** das Gelenk (1) zwei relativ zueinander bewegliche Gehäuseteile (22, 24) aufweist, wobei
a. einer der Träger (2, 3) mit einem der Gehäuseteile (22, 24) fest verbunden ist und der andere Träger (2, 3) mit dem anderen Gehäuseteil (22, 24) fest verbunden ist, oder wobei
b. eines der Gehäuseteile (22, 24) Bestandteil eines der Träger (2, 3) ist oder wobei
c. eines der Gehäuseteile (22, 24) Bestandteil eines Gehäuses eines der Träger (2, 3) ist und das andere Gehäuseteil (22, 24) Bestandteil eines Gehäuses des anderen Trägers (2, 3) ist.

## Claims

1. Motorized joint (1) for connecting two carriers (2, 3) of a programmable automatic moving device, which carriers (2, 3) can be moved relative to one another, and which automatic moving device has a drive motor (4), a transmission (6) which is connected downstream of the drive motor (4) in drive terms, and a locking apparatus (16), the transmission (6) having a drive element (7) which is connected fixedly to an output shaft (5) of the drive motor (4) so as to rotate with it, at least one intermediate element (10) which has a different rotational speed to the drive element (7), and an output element (17), the locking apparatus (16) being configured and arranged to directly brake and to lock the intermediate element (10), the output element (17), or a component which is connected fixedly to the intermediate element (10) or the output element (17) so as to rotate with it, and the locking apparatus (16) having a locking means (20) which is connected in a frictionally locking manner to the intermediate element (10), the output element (17), or the component which is connected fixedly to the intermediate element (10) or the output element (17) so as to rotate with it, which locking means (20) has at least one positively locking means which, in the switched-on state of the locking apparatus (16), interacts in a positively locking manner with a corresponding positively locking means which is fixed relative to a housing or a chassis so as to rotate with it, **characterized in that** there is an adjustable prestressing means (25) or a prestressing means (25) which has a cup spring or a corrugated and/or elastic and/or cylindrically curved strip, in particular a sheet metal strip, or a slotted ring for generating or for increasing the frictional force.

2. Motorized joint (1) according to Claim 1, **characterized in that**
a. the transmission (6) is configured as a strain wave gear mechanism, or **in that**
b. the transmission (6) is configured as a strain wave gear mechanism, and the drive element (7) is a wave generator, the strain wave gear mechanism having a radially flexible, externally toothed bush (9) which is in toothed engagement with a rigid, internally toothed internal gear at at least two engagement points, or **in that**
c. the transmission (6) is configured as a strain wave gear mechanism, and the drive element (7) is a wave generator, the strain wave gear mechanism having, as intermediate element (10), a radially flexible, externally toothed bush (9) which is in toothed engagement at at least two engagement points with a rigid, internally toothed internal gear which acts as output element (17), or **in that**
d. the transmission (6) is configured as a strain wave gear mechanism, and the drive element (7) is a wave generator, the strain wave gear mechanism having, as output element (17), a radially flexible, externally toothed bush (9) which is in toothed engagement at at least two engagement points with a rigid, internally toothed internal gear which acts as intermediate element (10), or in that
e. the transmission (6) is configured as a strain wave gear mechanism in the form of a cup-type gear mechanism, or **in that** the transmission (6) is configured as a strain wave gear mechanism in the form of a ring gear mechanism.

3. Motorized joint (1) according to Claim 1 or 2, **characterized in that**,
a. in the switched-on state in the case of the occurrence of an output-side torque with a value above a predefined or predefinable value, the locking apparatus (16) permits a movement of the output element (17) or the intermediate element (10) or the component which is connected fixedly to the intermediate element (10) or the output element (17) so as to rotate with it, in order to avoid damage of the output element (17) and the further components of the motorized joint (1) which lie in the power train, or **in that**,
b. in the switched-on state in the case of an occurrence of an output-side torque with a value above a predefined or predefinable value, the locking apparatus (16) permits a movement of the output element (17) or the intermediate element (10) or the component which is connected fixedly to the intermediate element (10) or the output element (17) so as to rotate with it, in order to avoid damage of the output element (17) and the further components of the motorized joint (1) which lie in the power train, the predefined value corresponding to the maximum permissible operating torque which may occur at the component to be locked, and/or **in that** the predefined value is selected in such a way that damage of the joint (1) and/or the transmission (6) is ruled out.

4. Motorized joint (1) according to one of Claims 1 to 3, **characterized in that** the locking apparatus is configured as a frictionally locking brake or has a frictionally locking brake.

5. Motorized joint (1) according to one of Claims 1 to 4, **characterized in that**
a. the locking apparatus (16) has a disc brake, or **in that**
b. the locking apparatus (16) has a disc brake, and there is a brake disc which is connected fixedly to (and so as to rotate with) the intermediate element (10), the output element (17), or the component which is connected fixedly to the intermediate element (10) or the output element (17) so as to rotate with it, and **in that** there is a brake booster which acts on the brake disc and is supported directly or indirectly on a housing or a chassis, or **in that**
c. the locking apparatus (16) has a disc brake, and there is a brake disc which is connected fixedly to (and so as to rotate with) the intermediate element (10), the output element (17), or the component which is connected fixedly to the intermediate element (10) or the output element (17) so as to rotate with it, and **in that** there is a brake booster which acts on the brake disc and is supported directly or indirectly on a housing or a chassis, the brake disc being mounted fixedly (and so as to rotate with), but displaceably in the axial direction, on a driver which is connected to the intermediate element, the output element or the component which is connected fixedly to the intermediate element or the output element so as to rotate with it, or **in that**
d. the locking apparatus (16) has a disc brake, and there is a brake disc which is connected fixedly to (and so as to rotate with) the intermediate element (10), the output element (17), or the component which is connected fixedly to the intermediate element (10) or the output element (17) so as to rotate with it, and **in that** there is a brake booster which acts on the brake disc and is supported directly or indirectly on a housing or a chassis, the brake booster pressing a friction element axially against the brake disc in the switched-on state of the locking apparatus, or in that
e. the locking apparatus (16) has a disc brake, and there is a brake disc which is connected fixedly to (and so as to rotate with) the intermediate element (10), the output element (17), or the component which is connected fixedly to the intermediate element (10) or the output element (17) so as to rotate with it, and **in that** there is a brake booster which acts on the brake disc and is supported directly or indirectly on a housing or a chassis, the brake booster pressing a friction element radially against the brake disc in the switched-on state of the locking apparatus, or **in that**
f. the locking apparatus (16) has a disc brake, and there is a brake disc which is connected fixedly to (and so as to rotate with) the intermediate element (10), the output element (17), or the component which is connected fixedly to the intermediate element (10) or the output element (17) so as to rotate with it, and **in that** there is a brake booster which acts on the brake disc and is supported directly or indirectly on a housing or a chassis, the brake booster having at least one magnet, in particular a permanent magnet and/or an electromagnet, and/or at least one spring element.

6. Motorized joint (1) according to one of Claims 1 to 5, **characterized in that**
a. there is a release apparatus for releasing the locking apparatus (16), or **in that**
b. there is a release apparatus for releasing the locking apparatus (16), which release apparatus can be activated electrically, or **in that**
c. there is a release apparatus for releasing the locking apparatus (16), which release apparatus has an electromagnet.

7. Motorized joint (1) according to one of Claims 1 to 6, **characterized in that** the locking means is arranged coaxially with respect to the intermediate element (10), the output element (17), or the component which is connected fixedly to the intermediate element (10) or the output element (17) so as to rotate with it.

8. Motorized joint (1) according to one of Claims 1 to 7, **characterized in that**
a. the prestressing means (25) presses the locking means (20), in particular axially, against the intermediate element (10), the output element (17), or the component which is connected fixedly to the intermediate element (10) or the output element (17) so as to rotate with it, or **in that**
b. the locking means is connected in a frictionally locking manner via the prestressing means (25) to the intermediate element (10), the output element (17), or the component which is connected fixedly to the intermediate element (10) or the output element (17), and the prestressing means is supported on one side on the locking means (20) and on the other side on the intermediate element (10), the output element (17), or the component which is connected fixedly to the intermediate element (10) or the output element (17) so as to rotate with it.

9. Motorized joint (1) according to one of Claims 1 to 8, **characterized in that** the corresponding positively locking means has a radially movable lock pin, the free end of which engages into a latching recess (19) of the positively locking means in the switched-on state of the locking apparatus (16).

10. Motorized joint (1) according to one of Claims 1 to 9, **characterized in that** the joint has two housing parts which can be moved relative to one another,
a. the drive motor (4) being arranged in one of the housing parts, and the transmission (6) being arranged in the other housing part, or **in that**
b. a part of the transmission (6) is arranged in one of the housing parts, and another part of the transmission (6) is arranged in the other housing part, or **in that**
c. the locking apparatus (16) is arranged in the same housing part as the transmission (6) or at least as that component of the transmission (6) which is to be braked directly.

11. Motorized joint (1) according to one of Claims 1 to 10, **characterized in that**
a. the joint is configured to connect two carriers (2, 3) in such a way that the plane, in which one of the carriers (2, 3) moves, and the plane, in which the other carrier (2, 3) moves, are always arranged parallel to one another, or **in that**
b. the joint is configured as a hinged joint, or **in that**
c. the joint is configured to connect two carriers in such a way that the plane, in which one of the carriers (2, 3) moves, is always arranged perpendicularly with respect to the other carrier (2, 3).

12. Programmable automatic moving device having two carriers which are connected such that they can be moved relative to one another by means of a motorized joint (1) according to one of Claims 1 to 11.

13. Programmable automatic moving device according to Claim 12, **characterized in that** one of the carriers (2, 3) is connected directly or indirectly fixedly to a stator (13) of the drive motor (4) and/or a drive motor housing of the drive motor (4) so as to rotate with them/it, and **in that** the other carrier (2, 3) is coupled fixedly to the output element (17) of the transmission (6) so as to rotate with it.

14. Programmable automatic moving device according to Claim 12 or 13, **characterized in that** the two carriers (2, 3) which are connected such that they can be moved by means of the motorized joint (1) are part of a robot arm.

15. Programmable automatic moving device according to one of Claims 12 to 14, **characterized in that** the joint (1) has two housing parts (22, 24) which can be moved relative to one another,
a. one of the carriers (2, 3) being connected fixedly to one of the housing parts (22, 24), and the other carrier (2, 3) being connected fixedly to the other housing part (22, 24), or
b. one of the housing parts (22, 24) being a constituent part of one of the carriers (2, 3), or
c. one of the housing parts (22, 24) being a constituent part of a housing of one of the carriers (2, 3), and the other housing part (22, 24) being a constituent part of a housing of the other carrier (2, 3).

## Revendications

1. Articulation motorisée (1), destinée à relier deux supports (2, 3) mobiles l'un par rapport à l'autre d'un robot manipulateur programmable, qui comporte un moteur d'entraînement (4) et une transmission (6) montée en aval du moteur d'entraînement (4) au niveau de la technique motrice, ainsi qu'un dispositif d'immobilisation (16), la transmission (6) comportant un élément d'entraînement (7) relié de manière solidaire en rotation avec un arbre de sortie (5) du moteur d'entraînement (4), au moins un élément intermédiaire (10), qui fait preuve d'une vitesse de rotation différente de celle de l'élément d'entraînement (7), ainsi qu'un élément de sortie (17), le dispositif d'immobilisation (16) étant conçu et placé pour freiner ou pour bloquer directement l'élément intermédiaire (10), l'élément de sortie (17) ou un élément constitutif relié de manière solidaire en rotation avec l'élément intermédiaire (10) ou avec l'élément de sortie (17) et le dispositif d'immobilisation (16) comportant un moyen de blocage (20) relié par friction avec l'élément intermédiaire (10), avec l'élément de sortie (17) ou avec l'élément constitutif relié de manière solidaire en rotation avec l'élément intermédiaire (10) ou avec l'élément de sortie (17), lequel comporte au moins un moyen à complémentarité de forme, qui dans l'état enclenché du dispositif d'immobilisation (16) coopère par complémentarité de forme avec un moyen de complémentarité de forme antagoniste solidaire en rotation avec un carter ou un châssis, **caractérisée en ce que** pour générer ou pour augmenter la force de friction, un moyen de précontrainte (25) réglable ou un moyen de précontrainte (25) qui comporte un ressort Belleville ou une bande ondulée et/ou élastique et/ou incurvée en forme de cylindre, notamment une bande de tôle, ou une bague fendue est présent.

2. Articulation motorisée (1) selon la revendication 1, **caractérisée en ce que**
a. la transmission (6) est conçue sous la forme d'une transmission harmonique, ou **en ce que**
b. la transmission (6) est conçue sous la forme d'une transmission harmonique et l'élément d'entraînement (7) est un générateur d'ondes, la transmission harmonique comportant une douille (9) flexible en direction radiale, munie d'une denture extérieure, qui sur au moins deux points d'engrènement est en engrènement avec une roue creuse rigide, munie d'une denture intérieure, ou **en ce que**
c. la transmission (6) est conçue sous la forme d'une transmission harmonique et l'élément d'entraînement (7) est un générateur d'ondes, la transmission harmonique comportant en tant qu'élément intermédiaire (10) une douille (9) flexible en direction radiale, munie d'une denture extérieure, qui sur au moins deux points d'engrènement est en engrènement avec une roue creuse rigide, munie d'une denture intérieure, qui fait office d'élément de sortie (17) ou **en ce que**
d. la transmission (6) est conçue sous la forme de transmission harmonique et l'élément d'entraînement (7) est un générateur d'ondes, la transmission harmonique comportant en tant qu'élément de sortie (17) une douille (9) flexible en direction radiale, munie d'une denture extérieure, qui sur au moins deux points d'engrènement est en engrènement avec une roue creuse rigide, munie d'une denture intérieure, qui fait office d'élément intermédiaire (10), ou **en ce que**
e. la transmission (6) est conçue sous la forme de transmission harmonique adoptant la forme d'une transmission en pot ou **en ce que** la transmission (6) est conçue sous la forme d'une transmission harmonique adoptant la forme d'une transmission annulaire.

3. Articulation motorisée (1) selon la revendication 1 ou 2, **caractérisée**
a. **en ce qu'**à l'état enclenché, en cas de survenance d'un couple de rotation du côté sortie d'une valeur supérieure à une valeur prédéfinie ou à une valeur prédéfinissable, pour éviter une détérioration de l'élément de sortie (17) et des autres éléments constitutifs, se trouvant dans le flux de forces, de l'articulation motorisée (1), le dispositif d'immobilisation (16) admet un déplacement de l'élément de sortie (17) ou de l'élément intermédiaire (10) ou de l'élément constitutif relié de manière solidaire en rotation avec l'élément intermédiaire (10) ou avec l'élément de sortie (17), ou
b. **en ce qu'**à l'état enclenché, en cas de survenance d'un couple de rotation du côté sortie d'une valeur supérieure à une valeur prédéfinie ou à une valeur prédéfinissable, pour éviter une détérioration de l'élément de sortie (17) et des autres éléments constitutifs, se trouvant dans le flux de forces, de l'articulation motorisée (1), le dispositif d'immobilisation (16) admet un déplacement de l'élément de sortie (17) ou de l'élément intermédiaire (10) ou de l'élément constitutif relié de manière solidaire en rotation avec l'élément intermédiaire (10) ou avec l'élément de sortie (17), la valeur prédéfinie correspondant au couple de rotation maximal admissible en service, qui est autorisé à survenir sur l'élément constitutif qui doit être bloqué et/ou en ce que la valeur prédéfinie est sélectionnée de telle sorte qu'une détérioration de l'articulation (1) et/ou de la transmission (6) soit exclue.

4. Articulation motorisée (1) selon l'une quelconque des revendications 1 à 3, **caractérisée en ce que** le dispositif d'immobilisation est conçu sous la forme d'un frein à friction ou comporte un frein à friction.

5. Articulation motorisée (1) selon l'une quelconque des revendications 1 à 4, **caractérisée en ce que**
a. le dispositif d'immobilisation (16) comporte un frein à disque, ou **en ce que**
b. le dispositif d'immobilisation (16) comporte un frein à disque et **en ce qu'**un disque de frein est présent, lequel est relié de manière solidaire en rotation avec l'élément intermédiaire (10), avec l'élément de sortie (17) ou avec l'élément constitutif relié de manière solidaire en rotation avec l'élément intermédiaire (10) ou avec l'élément de sortie (17), et **en ce qu'**un générateur de force de freinage est présent, qui agit sur le disque de frein et qui s'appuie directement ou indirectement sur un carter ou sur un châssis, ou **en ce que**
c. le dispositif d'immobilisation (16) comporte un frein à disque et **en ce qu'**un disque de frein est présent, lequel est relié de manière solidaire en rotation avec l'élément intermédiaire (10), avec l'élément de sortie (17) ou avec l'élément constitutif relié de manière solidaire en rotation avec l'élément intermédiaire (10) ou avec l'élément de sortie (17), et **en ce qu'**un générateur de force de freinage est présent, lequel agit sur le disque de frein et s'appuie directement ou indirectement sur un carter ou sur un châssis, le disque de frein étant logé de manière solidaire en rotation, en étant toutefois déplaçable en direction axiale sur un entraîneur relié avec l'élément intermédiaire, avec l'élément de sortie ou avec l'élément constitutif relié de manière solidaire en rotation avec l'élément intermédiaire ou avec l'élément de sortie, ou en ce que
d. le dispositif d'immobilisation (16) comporte un frein à disque et **en ce qu'**un disque de frein est présent, lequel est relié de manière solidaire en rotation avec l'élément intermédiaire (10), avec l'élément de sortie (17) ou avec l'élément constitutif relié de manière solidaire en rotation avec l'élément intermédiaire (10) ou avec l'élément de sortie (17), et **en ce qu'**un générateur de force de freinage est présent, lequel agit sur le disque de frein et s'appuie directement ou indirectement sur un carter ou sur un châssis, dans l'état enclenché du dispositif d'immobilisation, le générateur de force de freinage pressant un élément de friction en direction axiale contre le disque de frein, ou **en ce que**
e. le dispositif d'immobilisation (16) comporte un frein à disque et un disque de frein est présent, lequel est relié de manière solidaire en rotation avec l'élément intermédiaire (10), avec l'élément de sortie (17) ou avec l'élément constitutif relié de manière solidaire en rotation avec l'élément intermédiaire (10) ou avec l'élément de sortie (17), et **en ce qu'**un générateur de force de freinage est présent, lequel agit sur le disque de frein et s'appuie directement ou indirectement sur un carter ou sur un châssis, dans l'état enclenché du dispositif d'immobilisation, le générateur de force de freinage pressant un élément de friction en direction radiale contre le disque de frein, ou **en ce que**
f. le dispositif d'immobilisation (16) comporte un frein à disque et un disque de frein est présent, est relié de manière solidaire en rotation avec l'élément intermédiaire (10), avec l'élément de sortie (17) ou avec l'élément constitutif relié de manière solidaire en rotation avec l'élément intermédiaire (10) ou avec l'élément de sortie (17), et **en ce qu'**un générateur de force de freinage est présent, lequel agit sur le disque de frein et s'appuie directement ou indirectement sur un carter ou sur un châssis, le générateur de force de freinage comportant au moins un aimant, notamment un aimant permanent et/ou un électro-aimant, et/ou au moins un élément à ressort.

6. Articulation motorisée (1) selon l'une quelconque des revendications 1 à 5, **caractérisée en ce que**
a. pour désolidariser le dispositif d'immobilisation (16), un dispositif de désolidarisation est présent, ou **en ce que**
b. pour désolidariser le dispositif d'immobilisation (16), un dispositif de désolidarisation est présent, lequel est susceptible d'être activé électriquement, ou en ce que
c. pour désolidariser le dispositif d'immobilisation (16), un dispositif de désolidarisation est présent, lequel comporte un électro-aimant.

7. Articulation motorisée (1) selon l'une quelconque des revendications 1 à 6, **caractérisée en ce que** le moyen de blocage est placé de manière coaxiale par rapport à l'élément intermédiaire (10), à l'élément de sortie (17) ou à l'élément constitutif relié de manière solidaire en rotation avec l'élément intermédiaire (10) ou avec l'élément de sortie (17).

8. Articulation motorisée (1) selon l'une quelconque des revendications 1 à 7, **caractérisée en ce que**
a. le moyen de précontrainte (25) presse le moyen de blocage (20), notamment en direction axiale, contre l'élément intermédiaire (10), contre l'élément de sortie (17) ou contre l'élément constitutif relié de manière solidaire en rotation avec l'élément intermédiaire (10) ou avec l'élément de sortie (17), ou **en ce que**
b. le moyen de blocage est relié par friction, par l'intermédiaire du moyen de précontrainte (25) avec l'élément intermédiaire (10), avec l'élément de sortie (17) ou avec l'élément constitutif relié de manière solidaire en rotation avec l'élément intermédiaire (10) ou avec l'élément de sortie (17) et le moyen de précontrainte s'appuie d'une part sur le moyen de blocage (20) et d'autre part sur l'élément intermédiaire (10), sur l'élément de sortie (17) ou sur l'élément constitutif relié de manière solidaire en rotation avec l'élément intermédiaire (10) ou avec l'élément de sortie (17).

9. Articulation motorisée (1) selon l'une quelconque des revendications 1 à 8, **caractérisée en ce que** le moyen de complémentarité de forme antagoniste comporte une tige de blocage déplaçable en direction radiale, dont l'extrémité libre s'engage dans un évidement d'enclenchement (19) du moyen à complémentarité de forme, lorsque le dispositif d'immobilisation (16) est dans l'état enclenché.

10. Articulation motorisée (1) selon l'une quelconque des revendications 1 à 9, **caractérisée en ce que** l'articulation comporte deux parties de carter déplaçables l'une par rapport à l'autre,
a. le moteur d'entraînement (4) étant placé dans une des parties de carter et la transmission (6) étant placée dans l'autre partie de carter, ou **en ce**
b. **qu'**une partie de la transmission (6) est placée dans l'une des parties de carter et une autre partie de la transmission (6) est placée dans l'autre partie de carter, ou **en ce que**
c. le dispositif d'immobilisation (16) est placé dans la même partie de carter que la transmission (6) ou au moins que l'élément constitutif de la transmission (6) qui doit être freiné directement.

11. Articulation motorisée (1) selon l'une quelconque des revendications 1 à 10, **caractérisée en ce que**
a. l'articulation est conçue pour relier deux supports (2, 3), de telle sorte que le plan dans lequel se déplace l'un des supports (2, 3) et le plan dans lequel se déplace l'autre support (2, 3) soient toujours placés à la parallèle l'un de l'autre, ou **en ce que**
b. l'articulation est conçue sous la forme d'une articulation à charnière, ou **en ce que**
c. l'articulation est conçue pour relier deux supports, de telle sorte que le plan dans lequel se déplace l'un des supports (2, 3) soit toujours placé à la perpendiculaire de l'autre support (2, 3).

12. Robot manipulateur programmable, pourvu de deux supports reliés de manière mobile l'un par rapport à l'autre au moyen d'une articulation (1) motorisée selon l'une quelconque des revendications 1 à 11.

13. Robot manipulateur programmable selon la revendication 12, **caractérisé en ce que** l'un des supports (2, 3) est relié directement ou indirectement de manière solidaire en rotation avec un stator (13) du moteur d'entraînement (4) et/ou avec un carter de moteur d'entraînement du moteur d'entraînement (4) et **en ce que** l'autre support (2, 3) est accouplé de manière solidaire en rotation avec l'élément de sortie (17) de la transmission (6).

14. Robot manipulateur programmable selon la revendication 12 ou 13, **caractérisé en ce que** les deux supports (2, 3) reliés de manière mobile au moyen de l'articulation (1) motorisée sont une partie d'un bras de robot.

15. Robot manipulateur programmable selon l'une quelconque des revendications 12 à 14, **caractérisé en ce que** l'articulation (1) comporte deux parties de carter (22, 24) mobiles l'une par rapport à l'autre,
a. l'un des supports (2, 3) étant fixement relié avec l'une des parties de carter (22, 24) et l'autre support (2, 3) étant fixement relié avec l'autre partie de carter (22, 24), ou
b. l'une des parties de carter (22, 24) étant un élément intégrant de l'un des supports (2, 3), ou
c. l'une des parties de carter (22, 24) étant un élément intégrant d'un carter de l'un des supports (2, 3) et l'autre partie de carter (22, 24) étant un élément intégrant d'un carter de l'autre support (2, 3).
